(19) Europäisches Patentamt
European Patent Office
Office européen des brevets

(11) **EP 2 335 810 B1**

(12) **EUROPÄISCHE PATENTSCHRIFT**

(45) Veröffentlichungstag und Bekanntmachung des Hinweises auf die Patenterteilung:
**01.08.2012 Patentblatt 2012/31**

(51) Int Cl.:
*B01D 53/94* (2006.01)   *B01J 29/072* (2006.01)
*B01J 29/85* (2006.01)   *B01J 37/02* (2006.01)

(21) Anmeldenummer: **09015346.1**

(22) Anmeldetag: **11.12.2009**

(54) **Selektive katalytische Reduktion von Stickoxiden im Abgas von Dieselmotoren**

Selective catalytic reduction of nitrogen oxides in the exhaust gas of diesel engines

Réduction catalytique sélective d'oxydes d'azote dans du gaz d'échappement de moteurs diesel

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**22.06.2011 Patentblatt 2011/25**

(73) Patentinhaber: **Umicore AG & Co. KG
63457 Hanau-Wolfgang (DE)**

(72) Erfinder:
• **Seyler, Michael, Dr.
63517 Rodenbach (DE)**
• **Söger, Nicola, Dr.
D-61130 Nidderau (DE)**
• **Adelmann, Katja, Dr.
64297 Darmstadt (DE)**
• **Schuler, Anke, Dr.
63939 Wörth (DE)**
• **Pauly, Thomas R., Dr.
Clarkston, MI 48348 (DE)**
• **Jeske, Gerald, Dr.
63543 Neuberg (DE)**

(56) Entgegenhaltungen:
**US-A1- 2005 101 473**

EP 2 335 810 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Katalysator und ein Verfahren zur selektiven katalytischen Reduktion von Stickoxiden in Dieselmotorenabgasen mit Ammoniak oder einer zu Ammoniak zersetzlichen Verbindung.

Das Abgas von Dieselmotoren enthält neben den aus einer unvollständigen Verbrennung des Kraftstoffs resultierenden Schadgasen Kohlenmonoxid (CO) und Kohlenwasserstoffe (HC) Rußpartikel (PM) und Stickoxide ($NO_x$). Außerdem enthält das Abgas von Dieselmotoren bis zu 15 Vol.-% Sauerstoff. Es ist bekannt, daß die oxidierbaren Schadgase CO und HC durch Überleiten über einen geeigneten Oxidationskatalysator in unbedenkliches Kohlendioxid ($CO_2$) umgewandelt und Partikel durch Durchleiten des Abgases durch ein geeignetes Rußpartikelfilter entfernt werden können. Auch Technologien zur Entfernung von Stickoxiden aus Abgasen in Gegenwart von Sauerstoff sind im Stand der Technik gut bekannt. Eines dieser "Entstickungsverfahren" ist das sogenannte SCR-Verfahren (SCR = Selective Catalytic Reduction), d.h. die selektive katalytische Reduktion der Stickoxide mit dem Reduktionsmittel Ammoniak an einem dafür geeigneten Katalysator, dem SCR-Katalysator. Dabei kann Ammoniak als solches oder in Form einer unter Umgebungsbedingungen zu Ammoniak zersetzlichen Vorläuferverbindung dem Abgasstrom zugegeben werden, wobei unter "Umgebungsbedingungen" die Umgebung der zu Ammoniak zersetzlichen Verbindung im Abgasstrom vor SCR-Katalysator verstanden wird. Zur Durchführung des SCR-Verfahrens sind eine Quelle zur Bereitstellung des Reduktionsmittels, eine Einspritzvorrichtung zur bedarfsgerechten Eindosierung des Reduktionsmittels in das Abgas und ein im Strömungsweg des Abgases angeordneter SCR-Katalysator notwendig. Die Gesamtheit aus Reduktionsmittelquelle, SCR-Katalysator und anströmseitig zum SCR-Katalysator angeordneter Einspritzvorrichtung wird auch als SCR-System bezeichnet.

Zur Reinigung der Dieselabgase in Kraftfahrzeugen wird das SCR-System zumeist in Kombination mit anderen Abgasreinigungsaggregaten wie Oxidationskatalysatoren und Dieselpartikelfilter eingesetzt. Daraus ergeben sich viele verschiedene Möglichkeiten der Abgassystemgestaltung. Je nach Einbauposition des SCR-Systems und insbesondere je nach Anordnung des SCR-Katalysators im Strömungsweg des Abgases werden unterschiedliche Anforderungen an dessen Leistungsfähigkeit und Alterungsstabilität gestellt. Folgerichtig ist im Stand der Technik eine Vielzahl von SCR-Katalysatoren beschrieben worden, die sich zur Verminderung des Stickoxid-Gehalts im Abgas von Dieselmotoren eignen und die zumeist entsprechend der spezifischen Anforderungen der jeweiligen Abgassystemkonfiguration optimiert sind.

So offenbart beispielsweise EP 1 203 611 ein SCR-System, das bevorzugt in Kombination mit einem vorgeschalteten Oxidationskatalysator zum Einsatz kommt. Der SCR-Katalysator enthält neben einer SCR-aktiven Komponente eine $NO_x$-Speicherkomponente. Dabei kann als SCR-Komponente ein $TiO_2$/$VO_x$-basiertes Festsäuresystem eingesetzt werden, das gegebenenfalls noch $WO_3$, $MoO_3$, $SiO_2$, Sulfat oder Zeolith enthält. Weiterhin kommt als SCR-Komponente ein Zeolith der sauren $H^+$-Form oder ein Metallionen ausgetauschter Zeolith in Frage. Als $NO_x$-Speicherkomponente wird bevorzugt eine Verbindung der Elemente ausgewählt aus der Gruppe bestehend aus Alkalimetallen, Erdalkalimetallen und Cer eingesetzt. Darüber hinaus kann der Katalysator gegebenenfalls Platingruppenmetalle (Pt, Pd, Rh, Ir) als katalytisch aktive Komponenten enthalten, die auf der Stickoxid-Speicherkomponente und/oder auf einem Trägermaterial ausgewählt aus Aluminiumoxid, Ceroxid, Zirkonoxid, Titanoxid oder Mischoxiden davon aufgebracht sind.

EP 0 234 441 offenbart einen Katalysator für die selektive katalytische Reduktion von $NO_x$ zu Stickstoff in Anwesenheit von Ammoniak, der zu 5 bis 50 Gew.-% aus Zirkonoxid-Ausgangsmaterial mit einer spezifischen Oberfläche von zumindest 10 $m^2$/g, zu 50 bis 90 % aus einem oder mehreren Zeolithen in der Wasserstoff- oder Ammoniumform und zu 0 bis 30 % aus Bindemittel besteht. Als Zeolithe kommt bevorzugt Klinoptilolith gegebenenfalls in Abmischung mit Chabazit zum Einsatz. Desweiteren kann der Katalysator Vanadiumoxid und/oder Kupferoxid als Promotoren enthalten.

US 4,874,590 offenbart ein Verfahren zur katalytischen Verminderung von Stickoxiden neben Schwefeloxiden aus Gasströmen durch Überleiten des Gasstroms mit Ammoniak über ein mikroporöses, nicht-zeolithisches Molsieb. Dieses Molsieb wird bevorzugt ausgewählt aus der Gruppe der SAPOs, ELAPSOs, $AlPO_4$s, MeAlPOs, FeAPOs, TAPOs, ELAPOs und MeAFSOs. In das Molsieb können Metallionen ausgewählt aus Cu, Co, V, Cr, W, Ni, Pd, Pt, Mn, Mo, Rh, Mg, Al und Fe eingetauscht sein, wobei besonders bevorzugt Cu als Austauschion verwendet wird. Gegebenenfalls liegt die nicht-zeolithische Molsiebzusammensetzung geträgert in einer anorganischen, oxidischen Matrix vor, wobei üblicherweise amorphe, katalytisch aktive, anorganische Oxide eingesetzt werden wie Silica/Alumina, Tonerde, $SiO_2$, $Al_2O_3$, Mischoxide von $SiO_2$ mit $Al_2O_3$, $ZrO_2$, MgO, Thoriumoxid, Berylliumoxid, Si-Al-Th-Mischoxide, Si-Al-Zr-Mischoxide, Al-B-Mischoxide, Aluminiumtitanate und ähnliche.

WO 2005/088091 offenbart ein Verfahren zur Reduktion von Stickoxiden in Dieselabgasen unter Verwendung von Kraftstoff (Kohlenwasserstoffe) anstelle von Ammoniak oder einer zu Ammoniak zersetzlichen Verbindung als Reduktionsmittel. In diesem Verfahren wird ein Katalysator eingesetzt, der ein $NO_x$-absorbierendes Material und ein $NO_x$-reduzierendes Material enthält. Beide Materialien sind ausgewählt aus der Gruppe enthaltend natürliche, synthetische, ionenaustauschende, nicht-ionenaustauschende, modifizierte, nichtmodifizierte, "pillared", nicht-"pillared", Tonmineralien, Sepiolite, Attapulgite, natürliche, synthetische, ionenaustauschende, nicht-ionenaustauschende, modifizierte, nichtmodifizierte, Zeolithe, Cu, Ba, K, Sr und Ag-beladene, Al, Si und Ti-"gepillarte" Montmorillonite, Hectorite gedopt mit Fe, In, Mn, La, Ce, oder Cu sowie Mischungen daraus, Cu, Fe, Ag, Cebeladene Klinoptilolite sowie Mischungen davon. In bevorzugten Ausführungsformen werden Abmischungen von Zeolithen mit Tonmineralien und Kupfer als katalytisch aktive Komponente verwendet.

US 7,220,692 offenbart ebenfalls einen Katalysator, der für die Reduktion von Stickoxiden in mageren Verbrennungsabgasen unter Verwendung von Kohlenwasserstoffen als Reduktionsmittels geeignet ist. Dieser Katalysator ist bifunktional und kombiniert aktive, metallausgetauschte Molekularsiebe mit einer separaten stabilisierenden Metalloxidphase, die aus einer Sol-Vorläuferverbindung als Beschichtung über dem Molekularsiebpartikel erzeugt wird und eine verbesserte hydrothermale Stabilität bei gleichzeitigem Erhalt der Tieftemperatur-$NO_x$-Reduktionsaktivität bewirkt. Als metallausgetauschte Molekularsiebe werden vorzugsweise solche eingesetzt, deren Porengrößen mindestens 4 Ångström betragen (Zeolith Y, Zeolith β, Mordenit, Ferrierit, ZSM-5, ZSM-12) und die als Promotoren eines oder mehrere der Übergangsmetalle Cu, Co, Fe, Ag und Mo enthalten.

Es ist Aufgabe der vorliegenden Erfindung, einen Katalysator und ein Verfahren zur selektiven katalytischen Reduktion von Stickoxiden in Dieselmotorenabgasen mit Ammoniak oder einer zu Ammoniak zersetzlichen Verbindung bereitzustellen. Der im Verfahren verwendete Katalysator soll sich insbesondere durch eine verbesserte Konvertierungsaktivität bei der Reduktion von $NO_x$ mit Ammoniak bei Temperaturen oberhalb von 350°C bei zugleich hervorragender Selektivität zu Stickstoff auszeichnen. Zugleich sollen im Temperaturbereich zwischen 250 und 350°C und insbesondere im Tieftemperaturbereich zwischen 150 und 250°C keinerlei Aktivitätseinbußen im Vergleich zu herkömmlichen Katalysatoren zu beobachten sein.

Diese Aufgabe wird gelöst durch einen Katalysator zur selektiven katalytischen Reduktion von Stickoxiden in Dieselmotorenabgasen mit Ammoniak oder einer zu Ammoniak zersetzlichen Verbindung bestehend aus einem Tragkörper und einer darauf aufgebrachten katalytisch aktiven Beschichtung enthaltend eine physikalische Mischung aus • einem Zeolithen oder einer zeolithähnlichen Verbindung enthaltend 1 - 10 Gew.-% Kupfer, bezogen auf das Gesamtgewicht des Zeolithen bzw. der zeolithähnlichen Verbindung, wobei der Zeolith bzw. die zeolithähnliche Verbindung ausgewählt ist aus der Gruppe bestehend aus Chabazit, SAPO-34, ALPO-34 und Zeolith β; und
• einem homogenen Cer-Zirkon-Mischoxid und/oder einem Ceroxid.

Der erfindungsgemäße Katalysator wird eingesetzt in einem Verfahren zur selektiven katalytischen Reduktion von Stickoxiden in Dieselmotorenabgasen mit den Verfahrensschritten: (a.) Hinzufügen von Ammoniak oder einer zu Ammoniak zersetzlichen Verbindung aus einer vom Motor unabhängigen Quelle in das Stickoxide enthaltende, zu reinigende Abgas und (b.) Überleiten der in Schritt (a.) erzeugten Mischung aus zu reinigendem Abgas und Ammoniak oder einer zu Ammoniak zersetzlichen Verbindung über den erfindungsgemäßen Katalysator.

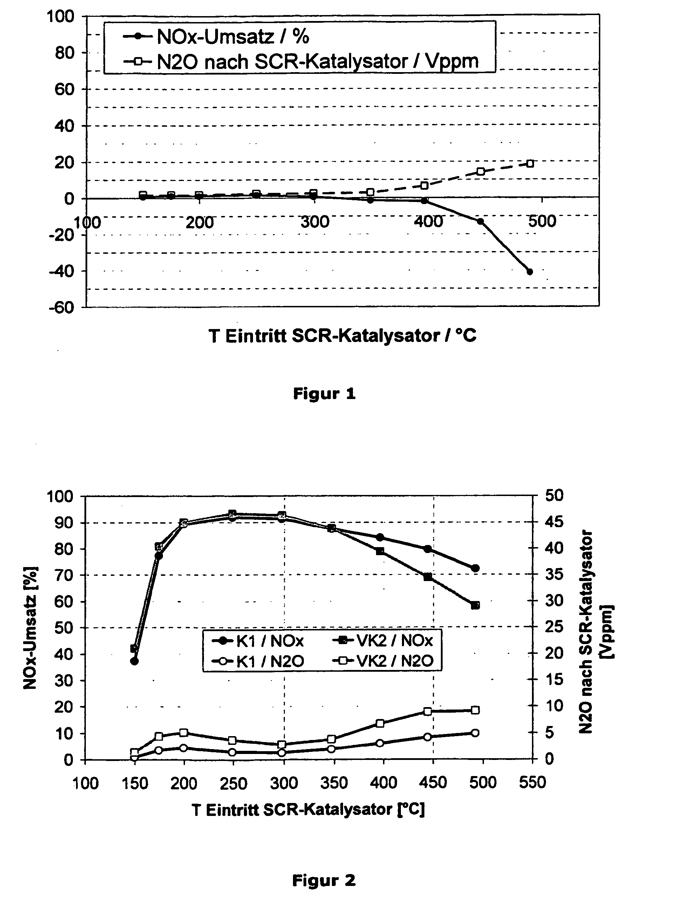

Es ist grundsätzlich bekannt, daß sich mit Kupfer ausgetauschten Zeolithe bzw. mit Kupfer ausgetauschte zeolithähnlichen Verbindungen zur Entstickung von Dieselabgasen eignen, wenn Ammoniak oder eine geeignete, zu Ammoniak zersetzlichen Verbindung wie beispielsweise Harnstoff als Reduktionsmittel verwendet wird. Entsprechende, aus dem Stand der Technik bekannte Katalysatoren zeichnen sich durch gute $NO_x$-Konvertierungsaktivitäten bei Temperaturen unterhalb von 300°C aus, weisen jedoch Nachteile bei höheren Temperaturen und insbesondere bei Temperaturen oberhalb von 350°C auf. In diesem Temperaturbereich kommt es häufig infolge der Oxidationskraft des Kupfers zur Überoxidation von Ammoniak unter Bildung von Lachgas $N_2O$ als unerwünschter, weil giftiger Sekundäremission. Die Überoxidation des Reduktionsmittels Ammoniak hat neben der Emission von Lachgas eine deutliche Degradation des $NO_x$-Umsatzes oberhalb von 350°C zur Folge. Vergleichsbeispiel 2 in Verbindung mit Figur 2 zeigt ein typisches $NO_x$-Konvertierungsprofil eines mit Kupfer ausgetauschten Zeolithkatalysators (VK2) unter Verwendung von Ammoniak als Reduktionsmittel. Es ist deutlich zu erkennen, daß der $NO_x$-Umsatz über VK2 ab 350°C mit ansteigender Temperatur abnimmt. Diese Eigenschaft beschränkt die Eignung dieser Katalysatoren auf ihren Einsatz bei Temperaturen unterhalb von 350°C.

Die Erfinder haben nun überraschend festgestellt, daß sich diese Eignungsbegrenzung durch die gezielte Abmischung des mit Kupfer ausgetauschten Zeolithen bzw. der mit Kupfer ausgetauschten zeolithähnlichen Verbindung mit einem unbehandelten, homogenen Cer-Zirkon-Mischoxid und/oder einem Ceroxid zumindest teilweise überwinden läßt. Dieser Effekt ist insbesondere deshalb überraschend, weil homogene Cer-Zirkon-Mischoxide und/oder Ceroxide in unbehandeltem Zustand normalerweise keine $NO_x$-Reduktionsaktivität zeigen. Im Gegenteil: Bei Temperaturen oberhalb von 350°C wird in magerem, Stickoxid-haltigem Dieselabgas über einem unbehandelten, homogenen Cer-Zirkon-Mischoxid ebenfalls eine Überoxidation des als Reduktionsmittel zugesetzten Ammoniaks zu Lachgas und somit die Bildung von zusätzlichem $N_2O$ und negativer $NO_x$-Umsatz beobachtet. Figur 1 zeigt beispielhaft das unter Bedingungen der Standard-Ammoniak-SCR-Reaktion zu beobachtende Umsatzverhalten über einem unbehandeltem Cer-Zirkon-Mischoxid aus 86 Gew.-% $CeO_2$, 10 Gew.-% $ZrO_2$ und 4 Gew.-% $La_2O_3$ (VK1 aus Vergleichsbeispiel 1).

Für eine physikalische Mischung des mit Kupfer ausgetauschten Zeolithen bzw. einer mit Kupfer ausgetauschten Zeolith-ähnlichen Verbindung wäre nun also zu erwarten, daß sich die $NO_x$-Konvertierung bei Temperaturen oberhalb von 350°C verschlechtert und der Anteil des aus der Überoxidation von Ammoniak stammenden $N_2O$ weiter ansteigt.

Infolge eines überraschenden, synergistischen Zusammenwirkens der beiden Komponenten ist jedoch das Gegenteil der Fall: Wie aus Beispiel 1 in Verbindung mit Figur 2 hervorgeht, zeigt ein erfindungsgemäßer Katalysator (K1), der eine Abmischung des mit Kupfer ausgetauschten Zeolithen bzw. einer zeolithähnlichen Verbindung mit einem unbehandelten, homogenen Cer-Zirkon-Mischoxid aus 86 Gew.-% $CeO_2$, 10 Gew.-% $ZrO_2$ und 4 Gew.-% $La_2O_3$ enthält, überraschenderweise eine deutliche Verbesserung des $NO_x$-Umsatzes bei Temperaturen oberhalb von 350°C. Zugleich bleiben die hervorragenden und für den Kupfer-Zeolith-Katalysator typischen Umsatzeigenschaften im Temperaturbereich zwischen 250 und 350°C und insbesondere im Tieftemperaturbereich zwischen 150 und 250°C erhalten. Die Bildung von Lachgas wird überraschenderweise nicht erhöht, sondern bleibt auf gleichem Niveau bzw. wird leicht verbessert, so daß die Selektivität zu Stickstoff erheblich besser ist, als es durch ein additives Zusammenwirken der Komponenten zu erwarten wäre.

In der erfindungsgemäßen physikalischen Mischung liegen der Zeolith bzw. die zeolithähnliche Verbindung und das homogene Cer-Zirkon-Mischoxid und/oder das Ceroxid bevorzugt in einem Mengenverhältnis von 4 : 1 bis 2: 1, besonders bevorzugt in einem Mengenverhältnis von 3:1 bis 2:1 und ganz besonders bevorzugt in einem Mengenverhältnis von 2 : 1 vor. Unter Mengenverhältnis wird dabei das Verhältnis der Gewichtsanteile (Gew.-%) der Komponenten in der Beschichtung zueinander verstanden.

Als Zeolith oder zeolithähnliche Verbindung werden bevorzugt solche eingesetzt, die eine mittlere Porengröße kleiner 4 Ängström (Å) aufweisen und ausgewählt sind aus der Gruppe bestehend aus Chabazit, SAPO-34 und ALPO-34. Besonders bevorzugt kommen die zeolithähnlichen Molsiebe SAPO-34 und ALPO-34 zum Einsatz. SAPO-34 ist ein zeolithanaloges Siliziumaluminiumphosphat-Molsieb mit Chabazit-Struktur, ALPO-34 ein zeolithanaloges Alumophosphat mit Chabazit-Struktur. Diese Verbindungen haben den Vorteil, daß sie resistent sind gegenüber der Vergiftung mit Kohlenwasserstoffen (HC), die das Dieselrohabgas enthält und die, je nach Einbauposition des SCR-Katalysators und Betriebszustand des Dieselmotors, deutliche Degradationen des Stickoxidumsatzes über herkömmlichen SCR-Katalysatoren verursachen können.

An herkömmlichen Kupfer-ausgetauschten Zeolith-Katalysatoren, die typischerweise mittlere durchschnittliche Porengrößen von mindestens 4 Å aufweisen, wurde beobachtet, daß unter Bedingungen der Ammoniak-SCR-Reaktion in Gegenwart von Kohlenwasserstoffen (HC) diese Kohlenwasserstoffe in das Porengerüst des Zeolithen einlagern. Es wird angenommen, daß diese eingelagerten Kohlenwasserstoffe zumindest zeitweise die reaktiven Zenten für die Ammoniak-SCR-Reaktion blockieren. Insgesamt werden infolgedessen an herkömmlichen Kupfer-ausgetauschten Zeolith-Katalysatoren bei Anwesenheit von Kohlenwasserstoffen im zu reinigenden Abgas unter den Reaktionsbedingungen der Ammoniak-SCR-Reaktion erhöhte Ammoniak-Durchbrüche und verschlechterte Stickoxid-Umsätze beobachtet. Durch den Einsatz eines Zeolithen bzw. einer zeolithähnlichen Verbindung mit einer mittleren Porengröße kleiner 4 Ängström (Å), die ausgewählt ist aus der Gruppe bestehend aus Chabazit, SAPO-34 und ALPO-34, werden solche HC-bedingten Vergiftungserscheinungen vermieden. Die geringe mittlere Porengröße dieser Verbindungen verhindert, daß Kohlenwasserstoffe in das Porengerüst des Zeolithen eindringen und so die reaktiven Zentren für die Ammoniak-SCR-Reaktion blockieren können. SAPO-34 und ALPO-34 zeichnen sich desweiteren durch eine exzellente thermische Stabilität ihrer Ammoniak-Speicherfähigkeit aus. Infolgedessen werden an den diese zeolithähnlichen Verbindungen enthaltenden bevorzugten Ausführungsformen des erfindungsgemäßen Katalysators auch in HC-haltigem Abgas sehr gute Stickoxidkonvertierungsraten bei zugleich hoher Selektivität zu Stickstoff und nur geringen Ammoniak-Durchbrüchen beobachtet.

Die im erfindungsgemäßen Katalysator eingesetzten homogenen Cer-Zirkon-Mischoxide sind bevorzugt hochoberflächige Mischoxide des Cers und des Zirkoniums, in denen mehrheitlich Mischkristalle von Ceroxid und Zirkonoxid vorliegen. Für solche Verbindungen wird auch der Begriff der "festen Lösung" von Ceroxid und Zirkonoxid verwendet. Die in den erfindungsgemäßen Katalysatoren zum Einsatz kommenden Cer-Zirkon-Mischoxide enthalten bevorzugt 40 bis 98 Gew.-% $CeO_2$, bezogen auf das Gesamtgewicht des Mischoxids. Auch reines Ceroxid kann eingesetzt werden. Besonders bevorzugt werden hochoberflächige homogene Cer-Zirkon-Mischoxide und/oder hochoberflächiges Ceroxid eingesetzt, welche mit 1 - 20 Gew.-%, bezogen auf das Gesamtgewicht des Mischoxids, des Oxids eines oder mehrerer Selten-Erd-Metalle ausgewählt aus der Gruppe bestehend aus Lanthan, Yttrium, Neodym, Praseodym und Samarium und/oder mit Nioboxid dotiert sind. Solche Dotierungen können unter anderem eine Stabilisierung der hohen Oberfläche des Materials insbesondere unter hydrothermalen Umgebungsbedingungen bewirken. Unter "hochoberflächigen" Oxiden werden dabei Materialien mit einer BET-Oberfläche von mindestens 10 $m^2/g$, bevorzugt mindestens 50 $m^2/g$, besonders bevorzugt mindestens 70 $m^2/g$ verstanden.

Desweiteren enthält die katalytisch aktive Beschichtung bevorzugter Ausführungsformen des erfindungsgemäßen Katalysators ein gegebenenfalls mit Selten-Erd-Sesquioxid stabilisiertes, hochoberflächiges Aluminiumoxid. Solche Aluminiumoxide sind kommerziell erhältlich und weisen in unbehandeltem Zustand typischerweise BET-Oberflächen von mehr als 100 $m^2/g$ auf. Sie sind bevorzugt mit 1 bis 10 Gew.-%, bezogen auf das Gesamtgewicht des Aluminiumoxids, eines Oxids eines oder mehrerer Selten-Erd-Metalle ausgewählt aus der Gruppe bestehend aus Lanthan, Yttrium, Neodym, Praseodym und Samarium dotiert. Der Zusatz eines solches Oxides zur Beschichtung bewirkt bei den erfindungsgemäßen Katalysatoren eine Verbesserung der thermischen Alterungsstabilität.

Die erfindungsgemäßen Katalysatoren zeichnen sich durch hohe $NO_x$-Konvertierungsraten im Temperaturbereich von 200 bis 500°C bei zugleich hervorragender Selektivität zu Stickstoff insbesondere im Hochtemperaturbereich oberhalb von 350°C aus. Das ausgesprochen gute Selektivitätsverhalten und die sehr geringe Neigung der erfindungsgemäßen Katalysatoren zur Überoxidation von Ammoniak ist unter anderem auch darauf zurückzuführen, daß die erfindungsgemäßen Katalysatoren kein Platingruppenmetall enthalten. Insbesondere enthält die katalytisch aktive Beschichtung der erfindungsgemäßen Katalysatoren kein Metall ausgewählt aus der Gruppe bestehend aus Platin, Palladium, Rhodium, Iridium oder Ruthenium. Bereits geringste Mengen dieser Edelmetalle in der katalytisch aktiven Beschichtung der erfindungsgemäßen Katalysatoren würden infolge ihrer starken oxidationskatalytischen Wirkung im mageren Dieselabgas eine Überoxidation von Ammoniak zu Lachgas $N_2O$ bewirken und somit die hohe Selektivität zu Stickstoff zerstören. Daher ist bei der Herstellung der erfindungsgemäßen Katalysatoren darauf zu achten, daß es weder durch die eingesetzten Rohstoffe noch durch die verwendeten apparativen Hilfsmittel zur Kontamination der katalytisch aktiven Beschichtung mit Edelmetallen kommen kann.

Die den Erfindern bekannte beste Ausführungsform des erfindungsgemäßen Katalysators besteht aus einem Tragkörper und einer darauf aufgebrachten katalytisch aktiven Beschichtung, welche zusammengesetzt ist aus:

- 50 - 60 Gew.-% Zeolith oder eine zeolithähnliche Verbindung enthaltend 1 - 10 Gew.-% Kupfer, bezogen auf das Gesamtgewicht des Zeolithen bzw. der zeolithähnlichen Verbindung, wobei der Zeolith bzw. die zeolithähnliche Verbindung ausgewählt ist aus der Gruppe bestehend aus Chabazit, SAPO-34, ALPO-34 und Zeolith β;

- 25 - 30 Gew.-% homogenes Cer-Zirkon-Mischoxid und/oder Ceroxid;

- 8 - 10 Gew.-% gegebenenfalls mit Selten-Erd-Sesquioxid stabilisiertes, hochoberflächiges Aluminiumoxid;

- Rest: Kalzinationsprodukt eines anorganischen Binders ausgewählt aus Silica-Sol, Alumina-Sol, Silica-Alumina-Sol und Zirkonoxid-Sol.

Der darin verwendete Zeolith bzw. die darin verwendete zeolithähnliche Verbindung weist bevorzugt eine durchschnittliche mittlere Porengröße kleiner 4 Ångström auf und ist ausgewählt aus der Gruppe bestehend aus Chabazit, SAPO-34 und ALPO-34. Ganz besonders bevorzugt handelt es sich um SAPO-34 und/oder ALPO-34.

Als Tragkörper für die katalytisch aktive Beschichtung eignen sich grundsätzlich alle bekannten Tragkörper für Heterogenkatalysatoren. Bevorzugt sind monolithische und monolithähnliche Durchflußwabenkörper aus Keramik und Metall, sowie Partikelfiltersubstrate, wie sie üblicherweise zur Reinigung von Dieselmotorenabgasen eingesetzt werden. Ganz besonders bevorzugt sind keramische Durchflußwabenkörper und keramische Wandflußfiltersubstrate aus Cordierit, Aluminiumtitanat oder Siliziumcarbid.

Der erfindungsgemäße Katalysator eignet sich zur Entfernung von Stickoxiden aus dem Abgas von Dieselmotoren in einem Verfahren zur selektiven katalytischen Reduktion derselben mit den folgenden Verfahrensschritten:

a. Hinzufügen von Ammoniak oder einer zu Ammoniak zersetzlichen Verbindung aus einer vom Motor unabhängigen Quelle in das Stickoxide enthaltende, zu reinigende Abgas;

b. Überleiten der in Schritt a. erzeugten Mischung aus zu reinigendem Abgas und Ammoniak oder einer zu Ammoniak zersetzlichen Verbindung über den erfindungsgemäßen Katalysator.

Die Erfindung wird im folgenden anhand einiger Beispiele und Figuren näher erläutert.

Es wurden erfindungsgemäße Katalysatoren und einige Vergleichskatalysatoren hergestellt. Hierzu wurden keramische Wabenkörper mit einem Durchmesser von 93 mm und einer Länge von 76,2 mm, die 62 Zellen pro $cm^2$ mit einer Zellwandstärke von 0,17 mm aufwiesen, mit Beschichtungssuspensionen der nachstehend genannten Zusammensetzung nach einem herkömmlichen Tauchverfahren beschichtet. Nach Aufbringen der Beschichtungssuspension wurden die Wabenkörper im Heizgebläse getrocknet und bei 640°C für die Dauer von 2 Stunden kalziniert.

Die in den Beispielen und Vergleichsbeispielen angegebenen Beladungen gelten für die fertigen Katalysatoren nach Trocknung und Kalzination. Die Angaben in g/L beziehen sich jeweils auf das Volumen des Gesamtkatalysators.

Den so hergestellten Katalysatoren wurden zur Untersuchung ihrer katalytischen Aktivität Bohrkerne entnommen. Diese Prüflinge hatten einen Durchmesser von 25,4 mm und eine Länge von 76,2 mm. Sofern nichts anderes angegeben ist, wurden die Prüflinge vor Untersuchung ihrer katalytischen Aktivität einer synthetischen Alterung unterzogen durch 16-stündige Lagerung im Ofen in einer Atmosphäre aus 10 Vol.-% Wasserdampf und 10 Vol.-% Sauerstoff in Stickstoff bei 750°C.

Anschließend wurde die Aktivität der Katalysatoren in einer Labormodellgasanlage untersucht. Hierzu wurden ein Stationärtest und/oder ein dynamischer Aktivitätstest durchgeführt. Die Testbedingungen werden im folgenden beschrieben:

### Stationärtest:

Zur Untersuchung des Umsatzverhaltens der Katalysatoren unter stationären Betriebsbedingungen wurden die folgenden Parameter eingestellt:

| Zusammensetzung des Modellgases | |
|---|---|
| NO [Vppm]: | 500 |
| $NH_3$ [Vppm]: | 450 |
| $O_2$ [Vol.-%]: | 5 |
| $H_2O$ [Vol.-%] | 1,3 |
| $N_2$: | Rest |
| **Allgemeine Testbedingungen** | |
| Raumgeschwindigkeit [$h^{-1}$]: | 30.000 |
| Temperatur [°C]: | 500; 450; 400; 350; 300; 250; 200; 175; 150 |
| Konditionierung vor Meß-beginn: | Modellgas-Atmosphäre; 600°C; einige Minuten |

Während der Messung wurden die Stickoxid-Konzentrationen des Modellabgases nach Katalysator mit einer geeigneten Analytik erfasst. Aus den bekannten, dosierten Stickoxid-Gehalten, die während der Konditionierung zu Beginn des jeweiligen Prüflaufs mit einer Vor-Katalysator-Abgasanalytik verifiziert wurden, und den gemessenen Stickoxid-Gehalten nach Katalysator wurde der Stickoxid-Umsatz über den Katalysator für jeden Temperaturmeßpunkt wie folgt berechnet:

$$U_{NO_x}[\%] \quad = \quad \left[ 1 - \frac{c_{Ausgang}(NO_x)}{c_{Eingang}(NO_x)} \right] \cdot 100$$

mit $C_{Eingang/Ausgang}(NO_x) = C_{Ein/Aus}(NO) + C_{Ein/Aus}(NO_2)$
Die erhaltenen Stickoxid-Umsatz-Werte $U_{NOx}$ [%] wurden zur Beurteilung der SCR-Aktivität der untersuchten Materialien als Funktion der vor Katalysator gemessenen Temperatur aufgetragen.

### Dynamischer Aktivitätstest:

Im dynamischen Aktivitätstest wurden die folgenden Gasmischungen eingesetzt:

| Gasmischung / Bestandteil | Gasmischung 1 | Gasmischung 2 | Gasmischung 3 |
|---|---|---|---|
| $O_2$ [Vol.-%]: | 10 | 10 | 10 |
| NO [Vppm]: | 500 | 500 | 0 |
| $NH_3$ [Vppm]: | 0 | 750 | 0 |
| CO [Vppm]: | 350 | 350 | 350 |
| $C_3H_6$ [Vppm]: | 100 | 100 | 100 |
| $H_2O$ [Vppm]: | 5 | 5 | 5 |
| $N_2$ [Vol.-%]: | Rest | Rest | Rest |
| Raumgeschwindigkeit $[h^{-1}]$ | 60.000 | 60.000 | 60.000 |

Der Test wurde bei neun verschiedenen Temperaturen zwischen 175°C und 500°C durchgeführt (500, 450, 400, 350, 300, 250, 225, 200 and 175°C). Bei jeder Temperatur wurde ein Zyklus aus vier unterschiedlichen Phasen durchlaufen, die nachfolgend als Phasen A bis D bezeichnet werden:

Phase A:   Gasmischung 1; Dauer: 5 Minuten

Phase B,   $NH_3$-SCR-Phase: Gasmischung 2; Dauer: bis zu einem $NH_3$-Durchbruch von 20 Vppm oder Abbruch nach Zeit;

Phase C,   Gasmischung 3; Leeren des $NH_3$-Speichers durch Temperaturrampe bis 500°C:

Phase D,   Gasmischung 3; Einregeln der nächsten Meßtemperatur

Innerhalb eines Zyklusses wurde zuerst die Katalysatortemperatur auf die definierte Zieltemperatur eingeregelt. Dann wurde der Katalysator für 5 Minuten mit Gasmischung 1 beaufschlagt (Phase A). In Phase B wurde auf Gasmischung 2 umgeschaltet, um den $NH_3$-SCR-Umsatz zu ermitteln. Diese Phase wurde entweder bei Detektion eines $NH_3$-Durchbruchs von 20 Vppm abgebrochen oder durch ein zuvor festgelegtes Zeitkriterium beendet. Dann wurde Gasmischung 3 eingestellt und der Katalysator auf 500°C aufgeheizt, um den Ammoniakspeicher zu entleeren (Phasen C). Anschließend wurde der Katalysator auf die nächste zu untersuchende Messtemperatur heruntergekühlt (Phasen D), der nächste Zyklus begann mit Phase A durch Einstellen der Gasmischung 1 nach Einregeln der Zieltemperatur.

Der dynamische $NO_x$-Umsatz wurde für alle neun Messtemperaturen aus den während Phase B ermittelten Konzentrationen der entsprechenden Abgaskomponenten vor und nach Katalysator ermittelt. Hierzu wurde ein mittlerer $NO_x$-Umsatz über diese Phase unter Berücksichtigung der $N_2O$-Bildung wie folgt berechnet:

$$U_{mittel,N_2Okorr} = \left[ 1 - \frac{c_{NO_x,mittel}^{nachKat} + 2 \cdot c_{N_2O,mittel}^{nachKat}}{c_{NO_x,mittel}^{vorKat} + 2 \cdot c_{N_2O,mittel}^{vorKat}} \right] \cdot 100\%$$

Folgende Katalysatoren wurden hergestellt und untersucht:

**Vergleichsbeispiel 1:**

Es wurde ein Vergleichsbauteil VK1 hergestellt, um das Reaktionsverhalten von unbehandeltem, homogenen Cer-Zirkon-Mischoxid in der Ammoniak-SCR-Reaktion zu untersuchen. Dazu wurde ein keramischer Wabenkörper des o.g. Typs in einem herkömmlichen Tauchverfahren mit 200 g/L eines unbehandelten, homogenen Cer-Zirkon-Mischoxids aus 86 Gew.-% $CeO_2$ 10 Gew.-% $ZrO_2$ und 4 Gew.-% $La_2O_3$ beschichtet und bei 500°C für die Dauer von 2 Stunden kalziniert.

Die katalytische Aktivität des frisch hergestellten Bauteils VK1 wurde im Stationärtest untersucht. Figur 1 zeigt die während des Tests beobachteten $NO_x$-Umsätze. Es ist deutlich zu erkennen, daß über dem Bauteil bei Temperaturen ab 400°C Stickoxide und $N_2O$ aus der Überoxidation des als Reduktionsmittel eingesetzten Ammoniaks gebildet werden. Im übrigen Temperaturbereich ist kein Stickoxid-Umsatz zu beobachten.

**Vergleichsbeispiel 2:**

Zur Herstellung eines Katalysators nach dem Stand der Technik VK2 wurde ein keramischer Wabenkörper mit 160 g/L der mit Kupfer ausgetauschten zeolithähnlichen Verbindung SAPO-34 versehen. Hierzu wurde kommerziell erhältliches SAPO-34 in Wasser suspendiert. Unter Rühren wurde Kupfer(II)-nitrat-Lösung zur Suspension zugegeben. Die zugegebene Menge der Kupfernitratlösung wurde so berechnet, daß der fertige Katalysator 3 Gew.-% Cu, bezogen auf das Gesamtgewicht der ausgetauschten zeolithähnlichen Verbindung, enthielt. Die Suspension wurde über Nacht gerührt. Anschließend wurde kommerziell erhältliches Silica-Sol als Binder hinzu gegeben, wobei die Menge des Sols so berechnet wurde, daß der fertige Katalysator 16 g/L $SiO_2$ in haftvermittelnder Funktion enthielt. Die Suspension wurde vermahlen und in einem herkömmlichen Beschichtungsverfahren auf den Wabenkörper aufgebracht. Der beschichtete Wabenkörper wurde getrocknet und kalziniert.

**Beispiel 1:**

Entsprechend der im Vergleichsbeispiel 2 geschilderten Vorgehensweise wurde ein erfindungsgemäßer Katalysator K1 hergestellt, dessen katalytisch aktiven Beschichtung folgende Zusammensetzung hatte:

| | |
|---|---|
| 96 g/L | mit 3 Gew.-% Cu ausgetauschtes SAPO-34 |
| 48 g/L | homogenes Cer-Zirkon-Mischoxid aus 86 Gew.-% $CeO_2$, 10 Gew.-% $ZrO_2$ und 5 Gew.-% $La_2O_3$ |
| 16 g/L | Aluminiumoxid enthaltend 4 Gew.-% $La_2O_3$ |
| 16 g/L | $SiO_2$ aus kommerziell erhältlichem Silica-Sol als Binder |

Das Umsatzverhalten der Katalysatoren VK2 und K1 in der Ammoniak-SCR-Reaktion wurde nach Alterung im Stationärtest und unter dynamischen Bedingungen untersucht. Figur 2 zeigt die Ergebnisse des Stationärtests. Oberhalb von 350°C zeigt der erfindungsgemäße Katalysator K1 deutliche Umsatzvorteile gegenüber dem Katalysator nach dem Stand der Technik VK2, der nur die mit Kupfer ausgetauschte, Zeolith-ähnliche Verbindung SAPO-34 enthält. Überraschenderweise führt die Beimischung des homogenen Cer-Zirkon-Mischoxids bei Temperaturen oberhalb von 350°C nicht nur zu einer deutlichen Verbesserung des $NO_x$-Umsatzes, sondern auch zu einer leichten Verringerung der $N_2O$-Bildung. Dies ist insbesondere deshalb überraschend, weil das zugesetzte Cer-Zirkon-Mischoxid, wie Vergleichsbeispiel 1 zeigt, in diesem Temperaturbereich eigentlich zur $N_2O$-Bildung beitragen müßte.

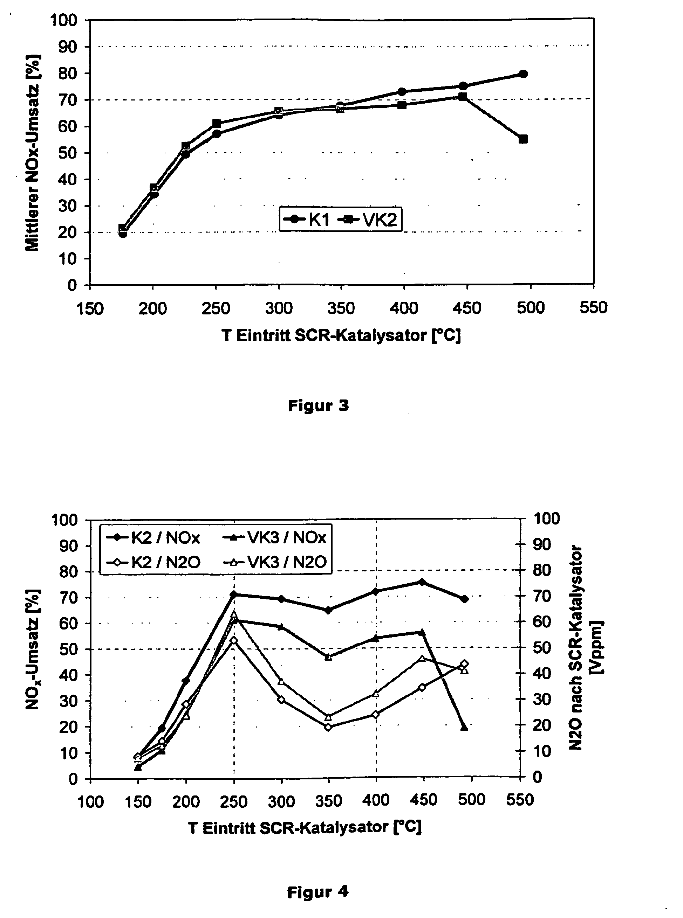

Figur 3 zeigt das Umsatzverhalten der Katalysatoren VK2 und K1 unter dynamischen Betriebsbedingungen. Das Ergebnis des Stationärtests wird bestätigt.

**Vergleichsbeispiel 3:**

Es wurde ein Katalysator nach dem Stand der Technik VK3 mit einer katalytisch aktiven Beschichtung der folgenden Zusammensetzung hergestellt:

| | |
|---|---|
| 160 g/L | mit 5 Gew.-% Cu ausgetauschter β-Zeolith; |
| 16 g/L | $SiO_2$ aus kommerziell erhältlichem Silica-Sol als Binder |

**Vergleichsbeispiel 4:**

Es wurde ein Vergleichskatalysator VK4 hergestellt, dessen katalytisch aktive Beschichtung vollständig aus mit Cu ausgetauschtem β-Zeolith bestand:

| | |
|---|---|
| 160 g/L | mit 5 Gew.-% Cu ausgetauschter β-Zeolith; |

**Beispiel 2:**

Es wurde ein weiterer erfindungsgemäßer Katalysator K2 mit einer katalytisch aktiven Beschichtung der-folgenden Zusammensetzung hergestellt:

> 96 g/L    mit 5 Gew.-% Cu ausgetauschter β-Zeolith;
>
> 48 g/L    homogenes Cer-Zirkon-Mischoxid aus 86 Gew.-% $CeO_2$, 10 Gew.-% $ZrO_2$ und 5 Gew.-% $La_2O_3$
>
> 16 g/L    Aluminiumoxid enthaltend 4 Gew.-% $La_2O_3$
>
> 16 g/L    $SiO_2$ aus kommerziell erhältlichem Silica-Sol als Binder

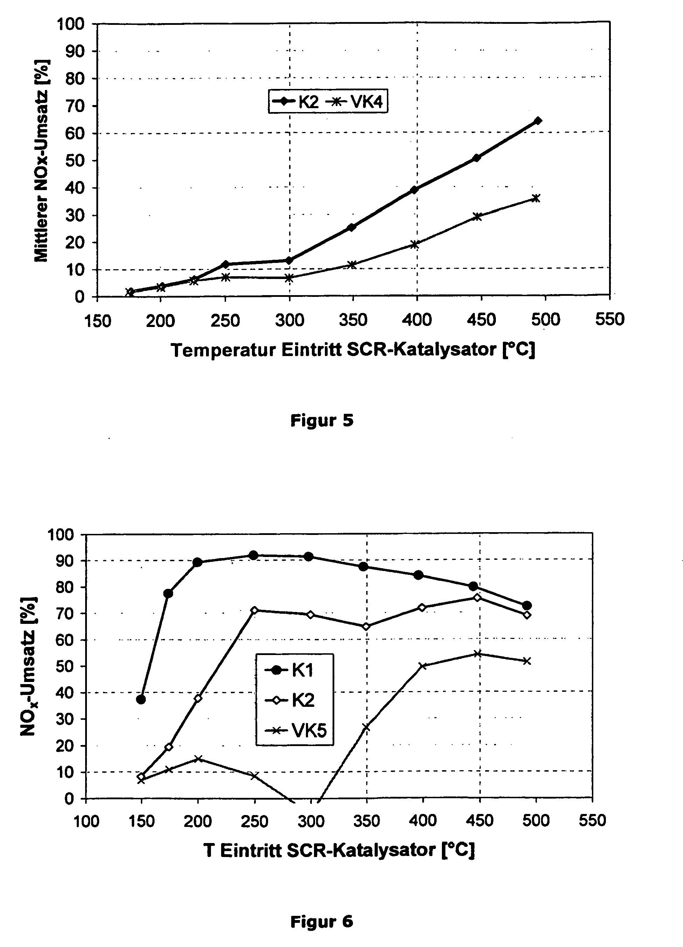

Die Katalysatoren VK3 und K2 wurden nach synthetischen Alterung dem Stationärtest unterzogen. Figur 4 zeigt das Ergebnis. Die durch die Abmischung mit dem Cer-Zirkon-Oxid erzielte Verbesserung des Stickoxid-Umsatzes wirkt sich unter stationären Bedingungen auf einen kommerziellen mit Cu ausgetauschten β-Zeolith-SCR-Katalysator nach Alterung noch deutlicher aus, als auf den SAPO-34-basierten Katalysator (VK2 // K1). Insbesondere zeigt der erfindungsgemäße Katalysator K2 schon ab 200°C deutliche Verbesserungen im $NO_x$-Umsatzverhalten. Der Effekt ist hier also nicht auf den Hochtemperaturbereich ab 350°C begrenzt, sondern wird bereits im mittleren Temperaturbereich ab 200°C deutlich sichtbar. Dies bestätigt sich auch im dynamischen Test (Figur 5; VK4 // K2).

**Vergleichsbeispiel 5:**

Desweiteren wurde der Einfluß der Abmischung mit einem homogenen Cer-Zirkon-Mischoxid auf einen mit Kupfer ausgetauschten Cu-ZSM-5-Katalysator untersucht. Dazu wurde ein Katalysator mit einer Beschichtung der folgenden Zusammensetzung hergestellt:

> 96 g/L    mit 5 Gew.-% Cu ausgetauschter ZSM-5-Zeolith;
>
> 48 g/L    homogenes Cer-Zirkon-Mischoxid aus 86 Gew.-% $CeO_2$, 10 Gew.-% $ZrO_2$ und 5 Gew.-% $La_2O_3$
>
> 16 g/L    Aluminiumoxid enthaltend 4 Gew.-% $La_2O_3$
>
> 16 g/L    $SiO_2$ aus kommerziell erhältlichem Silica-Sol als Binder

Auch dieser Katalysator VK5 wurde nach Alterung einem Stationärtest unterzogen. Das Ergebnis war allerdings ernüchternd. Aus unbekannten Gründen wird beim Cu-ZSM-5 keine synergistische Umsatzverbesserung durch Beimischung des homogenen Cer-Zirkon-Mischoxids beobachtet. Figur 6 zeigt die für VK5 erzielten Aktivitätsergebnisse im Stationärtest im Vergleich zu K1 und K2.

**Patentansprüche**

1. Katalysator zur selektiven katalytischen Reduktion von Stickoxiden in Dieselmotorenabgasen mit Ammoniak oder einer zu Ammoniak zersetzlichen Verbindung bestehend aus einem Tragkörper und einer darauf aufgebrachten katalytisch aktiven Beschichtung enthaltend eine physikalische Mischung aus

   • einem Zeolithen oder einer zeolithähnlichen Verbindung enthaltend 1 - 10 Gew.-% Kupfer, bezogen auf das Gesamtgewicht des Zeolithen bzw. der zeolithähnlichen Verbindung, wobei der Zeolith bzw. die zeolithähnliche Verbindung ausgewählt ist aus der Gruppe bestehend aus Chabazit, SAPO-34, ALPO-34 und Zeolith β; und
   • einem homogenen Cer-Zirkon-Mischoxid und/oder einem Ceroxid.

2. Katalysator nach Anspruch 1,
   **dadurch gekennzeichnet,**
   **dass** der Zeolith bzw. die zeolithähnliche Verbindung und das homogene Cer-Zirkon-Mischoxid und/oder das Ceroxid in einem Mengenverhältnis von 4 : 1 bis 2:1 in der physikalischen Mischung vorliegen.

3. Katalysator nach einem der Ansprüche 1 und 2,
   **dadurch gekennzeichnet,**
   **dass** der Zeolith bzw. die zeolithähnliche Verbindung eine durchschnittliche mittlere Porengröße kleiner 4 Ångström aufweist und ausgewählt ist aus der Gruppe bestehend aus Chabazit, SAPO-34 und ALPO-34.

4. Katalysator nach einem der Ansprüche 1 bis 3,
   **dadurch gekennzeichnet,**
   **dass** die katalytisch aktive Beschichtung desweiteren ein gegebenenfalls mit Selten-Erd-Sesquioxid stabilisiertes, hochoberflächiges Aluminiumoxid enthält.

5. Katalysator nach einem der Ansprüche 1 bis 4,
**dadurch gekennzeichnet,**
**dass** die katalytisch aktive Beschichtung kein Platingruppenmetall, insbesondere kein Metall ausgewählt aus der Gruppe bestehend aus Platin, Palladium, Rhodium, Iridium oder Ruthenium enthält.

6. Katalysator nach einem der Ansprüche 1 bis 5,
**dadurch gekennzeichnet,**
**dass** die katalytisch aktive Beschichtung wie folgt zusammengesetzt ist:

• 50 - 60 Gew.-% Zeolith oder eine zeolithähnliche Verbindung enthaltend 1 - 10 Gew.-% Kupfer, bezogen auf das Gesamtgewicht des Zeolithen bzw. der zeolithähnlichen Verbindung, wobei der Zeolith bzw. die zeolithähnliche Verbindung ausgewählt ist aus der Gruppe bestehend aus Chabazit, SAPO-34, ALPO-34 und Zeolith $\beta$;
• 25 - 30 Gew.-% homogenes Cer-Zirkon-Mischoxids und/oder Ceroxid;
• 8 - 10 Gew.-% gegebenenfalls mit Selten-Erd-Sesquioxid stabilisiertes, hochoberflächiges Aluminiumoxid;
• Rest: Kalzinationsprodukt eines anorganischen Binders ausgewählt aus Silica-Sol, Alumina-Sol, Silica-Alumina-Sol und Zirkonoxid-Sol.

7. Katalysator nach einem der Ansprüche 1 bis 6,
**dadurch gekennzeichnet,**
**dass** der Zeolith bzw. die zeolithähnliche Verbindung eine durchschnittliche mittlere Porengröße kleiner 4 Ängström aufweist und ausgewählt ist aus der Gruppe bestehend aus Chabazit, SAPO-34 und ALPO-34.

8. Verfahren zur selektiven katalytischen Reduktion von Stickoxiden in Dieselmotorenabgasen mit folgenden Verfahrensschritten:

a. Hinzufügen von Ammoniak oder einer zu Ammoniak zersetzlichen Verbindung aus einer vom Motor unabhängigen Quelle in das Stickoxide enthaltende, zu reinigende Abgas;
b. Überleiten der in Schritt a. erzeugten Mischung aus zu reinigendem Abgas und Ammoniak oder einer zu Ammoniak zersetzlichen Verbindung über einen Katalysator nach einem der Ansprüche 1 bis 7.

**Claims**

1. Catalyst for selective catalytic reduction of nitrogen oxides in diesel engine exhaust gases with ammonia or a compound decomposable to ammonia, consisting of a support body and a catalytically active coating applied thereto and comprising a physical mixture of

• a zeolite or a zeolite-like compound containing 1-10% by weight of copper, based on the total weight of the zeolite or of the zeolite-like compound, said zeolite or said zeolite-like compound being selected from the group consisting of chabazite, SAPO-34, ALPO-34 and zeolite $\beta$; and
• a homogeneous cerium-zirconium mixed oxide and/or a cerium oxide.

2. Catalyst according to Claim 1,
**characterized in that**
the zeolite or the zeolite-like compound and the homogeneous cerium-zirconium mixed oxide and/or the cerium oxide are present in the physical mixture in a ratio of 4:1 to 2:1.

3. Catalyst according to either of Claims 1 and 2,
**characterized in that**
the zeolite or the zeolite-like compound has an average mean pore size less than 4 ångstrom and is selected from the group consisting of chabazite, SAPO-34 and ALPO-34.

4. Catalyst according to any of Claims 1 to 3,
**characterized in that**
the catalytically active coating further comprises a high-surface area aluminum oxide optionally stabilized with rare earth sesquioxide.

**5.** Catalyst according to any of Claims 1 to 4,
**characterized in that**
the catalytically active coating does not comprise a platinum group metal, more particularly a metal selected from the group consisting of platinum, palladium, rhodium, iridium and ruthenium.

**6.** Catalyst according to any of Claims 1 to 5, **characterized in that** the catalytically active coating has the following composition:

• 50-60% by weight of zeolite or a zeolite-like compound containing 1-10% by weight of copper, based on the total weight of the zeolite or of the zeolite-like compound, said zeolite or said zeolite-like compound being selected from the group consisting of chabazite, SAPO-34, ALPO-34 and zeolite β;
• 25-30% by weight of homogeneous cerium-zirconium mixed oxide and/or cerium oxide;
• 8-10% by weight of high-surface area aluminum oxide optionally stabilized with rare earth sesquioxide;
• remainder: calcination product of an inorganic binder selected from silica sol, alumina sol, silica-alumina sol and zirconium oxide sol.

**7.** Catalyst according to any of Claims 1 to 6,
**characterized in that**
the zeolite or the zeolite-like compound has an average mean pore size less than 4 ångstrom and is selected from the group consisting of chabazite, SAPO-34 and ALPO-34.

**8.** Process for selective catalytic reduction of nitrogen oxides in diesel engine exhaust gases, comprising the following process steps:

a. adding ammonia or a compound decomposable to ammonia from a source independent of the engine to the exhaust gas which comprises nitrogen oxides and is to be cleaned;
b. passing the mixture, obtained in step a., of exhaust gas to be cleaned and ammonia or a compound decomposable to ammonia over a catalyst according to any of Claims 1 to 7.

**Revendications**

**1.** Catalyseur destiné à la réduction catalytique sélective d'oxydes d'azote dans des gaz d'échappement de moteurs diesel avec de l'ammoniac ou un composé décomposable en ammoniac, consistant en un corps de support et un revêtement catalytiquement actif, appliqué sur celui-ci, contenant un mélange physique à base

• d'une zéolithe ou d'un composé de type zéolithe, contenant 1-10 % en poids de cuivre, par rapport au poids total de la zéolithe ou du composé de type zéolithe, la zéolithe ou le composé de type zéolithe étant choisis dans le groupe constitué par la chabazite, SAPO-34, ALPO-34 et la zéolithe β ; et
• d'un oxyde mixte de cérium-zirconium homogène et/ou d'un oxyde de cérium.

**2.** Catalyseur selon la revendication 1,
**caractérisé en ce que**
la zéolithe ou le composé de type zéolithe et l'oxyde mixte de cérium-zirconium homogène sont présents dans le mélange physique en un rapport quantitatif de 4:1 à 2:1.

**3.** Catalyseur selon l'une quelconque des revendications 1 et 2,
**caractérisé en ce que**
la zéolithe ou le composé de type zéolithe présentent une taille moyenne de pore en moyenne inférieure à 4 Å et sont choisis dans le groupe constitué par la chabazite, SAPO-34 et ALPO-34.

**4.** Catalyseur selon l'une quelconque des revendications 1 à 3,
**caractérisé en ce que** le revêtement catalytiquement actif en outre contient un oxyde d'aluminium à grande surface, éventuellement stabilisé avec un sesquioxyde de terre rare.

**5.** Catalyseur selon l'une quelconque des revendications 1 à 4,
**caractérisé en ce que** le revêtement catalytiquement actif ne contient aucun métal de la famille du platine, en particulier aucun métal choisi dans le groupe constitué par le platine, le palladium, le rhodium,

l'iridium et le ruthénium.

6. Catalyseur selon l'une quelconque des revendications 1 à 5,
   **caractérisé en ce que** le revêtement catalytiquement actif est composé comme suit :

   • 50 - 60 % en poids de zéolithe ou d'un composé de type zéolithe contenant 1-10 % en poids de cuivre, par rapport au poids total de la zéolithe ou du composé de type zéolithe, la zéolithe ou le composé de type zéolithe étant choisis dans le groupe constitué par la chabazite, SAPO-34, ALPO-34 et la zéolithe β ;
   • 25 - 30 % en poids d'un oxyde mixte de cérium-zirconium homogène et/ou d'oxyde de cérium ;
   • 8 - 10 % en poids d'oxyde d'aluminium à grande surface, éventuellement stabilisé avec un sesquioxyde de terre rare ;
   • pour le reste : d'un produit de calcination d'un liant inorganique choisi parmi un sol de silice, un sol d'alumine, un sol de silice-alumine et un sol d'oxyde de zirconium.

7. Catalyseur selon l'une quelconque des revendications 1 à 6,
   **caractérisé en ce que**
   la zéolithe ou le composé de type zéolithe présentent une taille moyenne de pore en moyenne inférieure à 4 Å et sont choisis dans le groupe constitué par la chabazite, SAPO-34 et ALPO-34.

8. Procédé pour la réduction catalytique sélective d'oxydes d'azote dans des gaz d'échappement de moteurs diesel, comportant les étapes de processus suivantes :

   a. addition d'ammoniac ou d'un composé décomposable en ammoniac, provenant d'une source indépendante du moteur, au gaz d'échappement contenant des oxydes d'azote, à épurer ;
   b. passage du mélange à base du gaz à épurer et d'ammoniac ou d'un composé décomposable en ammoniac, produit dans l'étape a., sur un catalyseur selon l'une quelconque des revendications 1 à 7.

**Figur 1**

**Figur 2**

**Figur 3**

**Figur 4**

**Figur 5**

**Figur 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1203611 A
- EP 0234441 A
- US 4874590 A
- WO 2005088091 A
- US 7220692 B